# EUROPEAN PATENT SPECIFICATION

(11) **EP 4 270 622 B1**
(45) Date of publication and mention of the grant of the patent: **19.02.2025**
(21) Application number: 22169616.4
(22) Date of filing: 25.04.2022
(51) Int. Cl.: H01M 50/358, H01M 50/367

(54) **BATTERY PACK AND ELECTRIC VEHICLE**
BATTERIEPACK UND ELEKTRISCHES FAHRZEUG
BLOC-BATTERIE ET VÉHICULE ÉLECTRIQUE

(43) Date of publication of application: 01.11.2023
(73) Proprietor: Samsung SDI Co., Ltd., Yongin-si, Gyeonggi-do 17084 (KR)
(72) Inventor: Kojc, Miran, 8071 Hausmannstätten (AT); Reinprecht, Wolfgang, 8144 Attendorf (AT); Montaruli, Mariagrazia, 8010 Graz (AT)
(74) Representative: Gulde & Partner

(56) References cited:
- WO-A1-2012/133710
- WO-A1-2022/003716
- DE-A1- 102019 200 156
- JP-A- 2010 277 735
- US-A1- 2015 125 720
- US-A1- 2021 359 374

## Description

### Field of the Disclosure

The present disclosure relates to a battery pack. The disclosure also relates to an electric vehicle.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules. These connections must remain functional and safe during the average service life of the battery system. Further, installation space and interchangeability requirements must be met, especially in mobile applications.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas, also called venting gas, are ejected, i.e., discharged, from inside of the failed battery cell through the venting opening, i.e., the degassing valve, of the cell housing into the battery pack. The main components of the venting gas are H₂, CO₂, CO, electrolyte vapor and other hydrocarbons. The venting gas is therefore burnable and potentially toxic. Furthermore, the venting gas can be electrically conducting. This might cause arcing and/or a short circuit. The venting gas also causes a gas-pressure increase inside the battery pack.

In the prior art, a battery pack may not provide a dedicated channel for venting, i.e., venting channel, also called an exhausting channel, or a channel structure. Instead, a volume within the battery pack might provide a path for hot venting gas to reach a venting element and an exterior of the battery pack. Due to a thermal runaway, thermal propagation and pollution, i.e., a contamination with deposits by components of the venting gas, within the battery pack may occur which may lead to an atmosphere which promotes arcing and/or a short circuit within the battery pack.

DE 10 2019 200 156 A1 discloses a battery housing of a battery system for an electric vehicle. A plurality of battery modules, which each have a plurality of battery cells, are arranged within the battery housing which comprises a base body and a cover. The cover of the battery housing is fastened to structural elements by a screw connection. Each of the structural elements together with the cover forms a degassing channel.

US 2010/0052692 A1 discloses a car battery system comprising battery blocks accommodated inside a case. A battery holder is attached outside the battery block to hold the stacked battery cells of the battery block. The case is attached to endplates of the battery holder via screws. The battery system has a gas exhaust duct provided with connecting flanges projecting from both sides and positioned above the endplates to attach the gas exhaust duct to the endplates via set screws.

JP 2010-277735 A discloses a power supply device with a battery block comprising battery cells with safety valves, a gas duct, a pressing portion, a seal member, and a frame for fixing the gas duct to the upper surface of the battery block. The gas duct is designed to have sufficient strength so as not to be destroyed when high-pressure and high-temperature gas is discharged, and is preferably made of a metal such as stainless steel having excellent heat resistance and rigidity.

Typically, a structural element as disclosed in DE 10 2019 200 156 A1, a gas exhaust duct as disclosed in US 2010/0052692 A1 or the gas duct as disclosed in JP 2010-277735 A is made of metal. In case of a thermal runaway, electrical properties of metal could cause electrical currents flowing unintendedly and/or uncontrollably leading to arcing and/or a short circuit.

It is an object of the present invention to provide a mechanical stable battery pack that efficiently uses construction space within the battery pack and that may, in the case of a thermal runaway, reliably guide a venting gas while minimizing the risk of arcing and/or of a short circuit.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery pack according to claim 1 comprises a housing and a plurality of battery cells accommodated within the housing; wherein each of the plurality of battery cells comprises a degassing valve; the battery pack comprises a gas channel; wherein the gas channel is mounted to the housing as a structural member of the housing; the battery pack comprises a thermally and electrically isolating sheet, and the isolating sheet is arranged between the battery cells and the gas channel; and wherein the isolating sheet is adapted to provide a conditional fluid communication between the gas channel and each of the degassing valves of the plurality of battery cells, wherein the conditional fluid communication depends on one of the battery cells is ejecting and/or having ejected a venting gas through the degassing valve of the battery cell, and wherein the isolating sheet comprises a plurality of predetermined breaking sections, each arranged to overlap with a corresponding one of the degassing valves of the battery cells and/or an outlet port of one of the degassing valves of the battery cells. The housing comprises two longitudinal beams, two crossbeams, a top cover and a bottom cover forming an interior space in which the plurality of battery cells is arranged, and the gas channel is provided between the plurality of battery cells and the top cover of the housing and the top cover and the gas channel are mounted together.

According to another aspect of the present disclosure, an electric vehicle comprises the battery pack according to the present disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment.
- Fig. 2: illustrates a perspective top view of a battery pack according to an embodiment.
- Fig. 3: illustrates a perspective bottom view of a battery pack according to an embodiment.
- Fig. 4: illustrates a sectional view of a battery pack according to an embodiment.
- Fig. 5: illustrates another sectional view of a battery pack according to an embodiment.
- Fig. 6: illustrates perspective view of a detail of a battery pack according to an embodiment.

### Detailed Description of the Invention

### General Concept

According to the invention which is given in the claims a battery pack comprises a housing and a plurality of battery cells accommodated within the housing. Therein, each of the plurality of battery cells comprises a degassing valve. The degassing valve is adapted to release an excess pressure from within the battery cell by ejecting, i.e., discharging, a venting gas in a surrounding of the battery cell. The excess pressure may result from a chemical reaction and/or a temperature above a predetermined temperature threshold, e.g., in case of a thermal runaway.

The battery pack comprises a gas channel. The gas channel forms part of a venting path to conduct a venting gas. The venting path leads from the degassing valve via the gas channel through the battery pack. The gas channel enables a directed and well-defined distribution of hot venting gas. Hence, a risk of an overheating or even melting of battery cells other than a battery cell in thermal runaway or of an insulation of wiring by heat of the venting gas can be reduced. The pollution can be distributed in an inner space of the battery pack, and, consequently can reduce building up of an atmosphere inside the battery pack that leads to arcing. I.e., the gas channel achieves a separation of venting gasses from a remaining volume inside the housing other than the gas channel. This prevents a local pollution of the remaining volume inside the battery pack and prevents in particular building up an atmosphere that promotes arcing.

The gas channel is mounted to the housing as a structural member of the housing. Thus, the gas channel, i.e., the venting channel, further enhances mechanical properties of the battery pack and/or the housing. The gas channel, i.e., channel structure, improves the stiffness of the battery pack as, e.g., under normal working condition, the gas channel may be adapted to support swelling forces at a cover face of the battery cells.

The battery pack comprises a thermally and electrically isolating sheet, and the isolating sheet is arranged between the battery cells and the gas channel. The thermally and electrically isolating sheet prevents leakage currents between each of the battery cells and the gas channel and/or the housing, in particular in case of a thermal runaway and/or if electrically conducting particles deposit within the gas channel. Furthermore, the thermally and electrically isolating sheet reduces a heat transfer between a venting gas and the gas channel as the gas channel is thermally isolated from the venting gas. The thermally and electrically isolating sheet reduces a heat transfer between a venting gas of a battery cell in thermal runaway and remaining life battery cells, i.e., battery cells not being in thermal runaway. The isolating sheet is arranged and adapted to separate battery cells, i.e., the cell stacks from the gas channel and from the housing.

The isolating sheet is adapted to provide a conditional fluid communication between the gas channel and each of the degassing valves of the plurality of battery cells, wherein the conditional fluid communication depends on one of the battery cells is ejecting and/or having ejected a venting gas through the degassing valve of the battery cell. In other words, if no thermal runaway occurs and/or has occurred in a battery cell, no venting gas is ejected and has been ejected through the degassing valve of the battery cell, and, hence, the gas channel and the degassing valve of the battery cell are not in fluid communication with each other; if a thermal runaway occurs and/or has occurred, a venting gas is ejected and/or has been ejected through the degassing valve of the battery cell, and, hence, the gas channel and the degassing valve of the battery cell are in fluid communication with each other. Thus, the conditional fluid communication implies that in case a venting gas needs to be discharged in the gas channel, the degassing valve and the gas channel are in fluid communication with each other. In other words, the isolating sheet is adapted to provide a fluid communication of the gas channel and a battery cell that is or was in a thermal runaway condition, and to block a fluid communication of the gas channel and a life battery cell. Thereby, the venting gas can be discharged from the battery cell in thermal runaway in the gas channel but the remaining life battery cells remain protected, i.e., thermally and electrically isolated from the gas channel and the vent gas. This minimizes the risk of arcing and/or of a short circuit as the venting gas of only the battery cell is discharged in the gas channel, and the gas channel and the remaining life battery cells are reliably protected from heat and/or deposits of the venting gas.

The gas channel provides a mechanical stable battery pack that efficiently uses construction space within the battery pack. The gas channel and the isolating sheet enable in conjunction with each other that, in the case of a thermal runaway, a venting gas is reliably guided through the battery pack while the risk of arcing and/or of a short circuit is minimized.

According to one embodiment, the isolating sheet comprises a plurality of predetermined breaking sections, wherein each of the breaking sections is arranged to overlap with one of the degassing valves of the battery cells and/or an outlet port of one of the degassing valves of the battery cells. In other words, the isolating sheet is adapted to break, i.e., burst, at well-defined and predetermined sections, in case the pressure difference between opposite faces of the isolating sheet exceeds a predetermined threshold, which is adjustable by the breaking sections. The breaking sections are arranged to overlap the degassing valves and/or outlet ports so that the degassing valves and/or outlet ports are covered by the isolating sheet and in particular by the predetermined breaking sections. If a venting gas is ejected through one of the degassing valves and/or outlet ports by one of the battery cells in a thermal runaway, one of the breaking sections that overlaps the degassing valve and/or the outlet port bursts so that the venting gas of the battery cell in thermal runaway can be discharged from the battery cell. The remaining breaking sections of the remaining life battery cells which do not eject venting gas remain unbroken, and the remaining life battery cells remain protected from heat and electric currents by the isolating sheet. Thus, the remaining life battery cells are not in fluid communication with the gas channel. I.e., the predetermined breaking section implies a conditional fluid communication between the battery cell and the gas channel.

According to one embodiment, each of the breaking sections is formed by a plurality of perforations and/or by a depression of the isolating sheet. This is a cost-effective embodiment of forming the breaking sections which allows a precise arrangement of the breaking sections and a well-defined pressure threshold at which the breaking section is adapted to break.

According to one embodiment, each of the breaking sections is adapted to break in dependence on a predetermined pressure and/or in dependence on one of the battery cells is ejecting and/or having ejected a venting gas through the degassing valve of the battery cell. Thus, the breaking sections of the isolating sheet are adapted to break if a thermal runaway occurs. If the thermal runaway occurs in one of the battery cells and the breaking section that covers the battery cell breaks, a venting gas can be ejected and can be released from the battery cell in thermal runaway to the gas channel.

According to one embodiment, the gas channel is arranged above a cover face of each of the battery cells, and the isolating sheet is arranged between the gas channel and the cover faces of the battery cells. In other words, the gas channel is arranged so that each of the battery cells can, in case of a thermal runaway, eject venting gas into the gas channel. The isolating sheet being arranged between the gas channel and the cover faces enables the fluid communication between a battery cell in thermal runaway ejecting venting gas and the gas channel while the remaining life battery cells remain covered by the isolating sheet so that the remaining life battery cells are protected from heat and/or chemicals of the venting gas. The gas channel being arranged above the cover face means that the gas channel is arranged between the cover faces of the battery cells and a top cover of the housing. Alternatively, the isolating sheet can be arranged on other locations, e.g., in a bottom section of the housing if a degassing valve is arranged to discharge a venting gas towards a bottom cover of the housing.

According to one embodiment, the gas channel is made of metal and/or steel. This embodiment provides an improved stiffness of the housing. The gas channel is thus made from a material that resists a high-speed jet of hot venting gas containing small hot particles and/or chips. As an example, the gas channel can be made of a fire-resistant steel or a mild steel.

According to one embodiment, the isolating sheet is clamped between the battery cells and the gas channel. This embodiment enables an efficient manufacture of the battery pack and a reliable arrangement of the isolating sheet between the battery cells and the gas channel.

According to one embodiment, the battery pack comprises a common venting channel branching off from the gas channel, wherein the isolating sheet is adapted to provide a conditional fluid communication between the gas channel and the common venting channel. The common venting channel and the gas channel form a venting path or at least a part thereof along which a venting gas is guided. The gas channel guides the gas from each of the battery cells, e.g., via a plurality of elongated gas channel portions, to the common venting channel so that venting gasses of a plurality of battery cells in a thermal runaway are guided to the common venting channel. Therein, the common venting channel may be a frame member of the housing. Optionally, the common venting channel is in fluid communication with an exterior of the housing to discharge the vent gas out of the battery pack in an exterior of the battery pack, e.g., via an optionally central outlet opening. The isolating sheet prevents a pre-heating and/or pollution by a battery cell in thermal runaway of a battery stack adjacent to a battery stack that comprises the battery cell in thermal runaway, i.e., to prevent the pollution or preheating of the venting channel volume above the other life battery cells and/or cell stacks. The conditional fluid communication between the gas channel and the common venting channel optionally depends on the same condition as the conditional fluid communication between the gas channel and each of the degassing valves of the plurality of battery cells. Alternatively, conditional fluid communication between the gas channel and the common venting channel optionally depends on another condition as the conditional fluid communication between the gas channel and each of the degassing valves of the plurality of battery cells, e.g., a pressure threshold at which the isolating sheet provides a fluid communication differs.

According to one embodiment, the battery pack comprises at least two cell stacks; wherein the common venting channel is arranged between the at least two cell stacks. This provides an efficient arrangement of the common venting channel as the venting gas from the at least two cell stacks can be collectively guided by the gas channel to the common venting channel.

According to one embodiment, the housing comprises at least one hollow beam, wherein the battery pack comprises a venting path leading from the degassing valves of the battery cells through the at least one gas channel and the at least one hollow beam in an exterior of the battery pack. The hollow beam forms a part of the venting path. The hollow beam improves the usage of construction space within the battery cell and may provide a mechanical stiff structural element that improves mechanical characteristics of the housing.

According to one embodiment, the hollow beam comprises an upper beam section, a lower beam section in fluid communication with the upper beam section and a separation member, wherein the upper beam section and the lower beam section are separated from each other by the separation member. Thus, the venting path leads a venting gas via the upper beam section and the lower beam section. Thus, the optionally horizontally arranged separation member leads to an increased length of the venting path to enable to cool the venting gas as the venting gas moves through the hollow beam before being discharged in an exterior of the battery pack.

According to one embodiment, the separation member comprises at least one fluid passage providing the conditional fluid communication between the upper beam section and the lower beam section. This enables a well-defined layout of the venting path within the hollow beam. Optionally, the separation member comprises one fluid passage per pair of cell stacks.

According to one embodiment, the at least one gas channel is arranged and adapted to mechanically bond the plurality of battery cells. I.e., the gas channel is adapted as a bonding member for the battery cells, i.e., as a cell holder and/or cell retainer. The number of cell bonding members and/or the number of the bonding sections at which one or more of the battery cells are affixed can be reduced.

According to one embodiment, the housing comprises a top cover, and the top cover is mounted to the gas channel. Mounting the gas channel to the top cover allows an efficient manufacture of the battery cell, a space-saving arrangement of the gas channel and may improve mechanical characteristics of the housing as the gas channel is arrangeable to mechanically support the top cover.

According to another aspect of the present disclosure, an electric vehicle comprises the battery pack according to the present disclosure. Optionally, the battery pack comprises any of the above-described optional features to achieve a technical effect associated therewith.

### Specific Embodiments

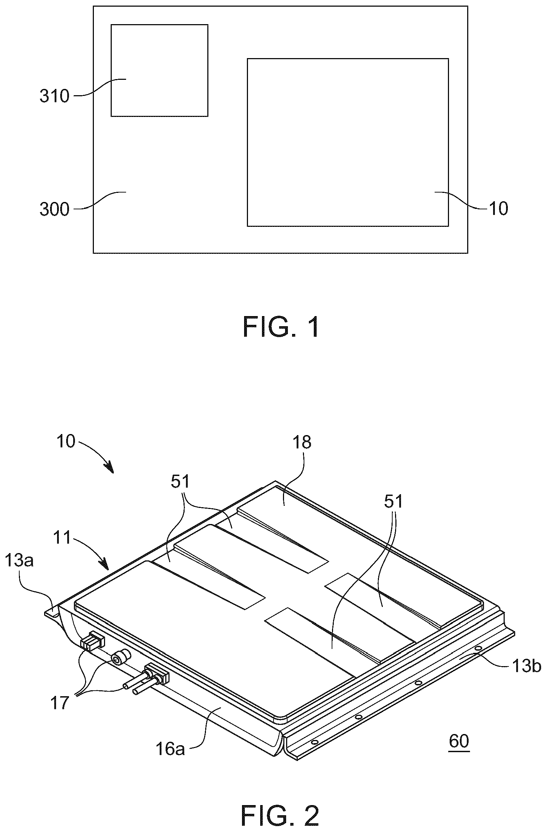

Figure 1 illustrates a schematic view of an electric vehicle 300 according to an embodiment.

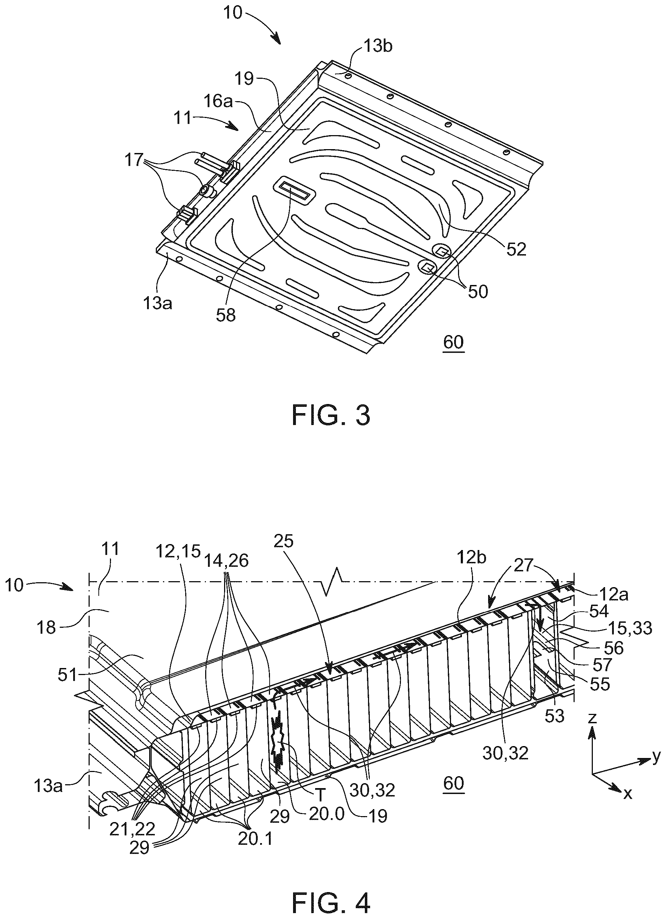

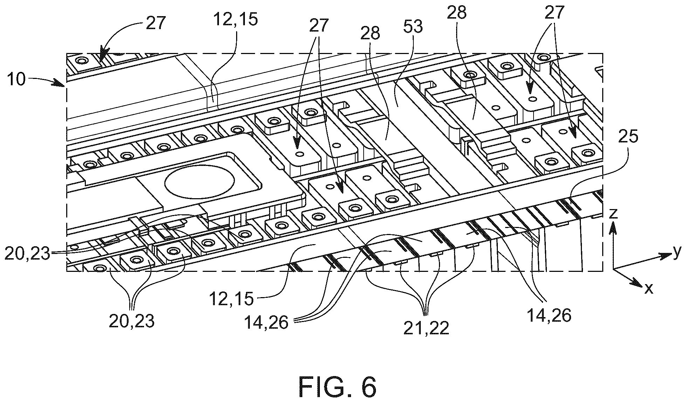

The electric vehicle 300 is propelled by an electric motor 310, using energy stored in rechargeable batteries cells 20 (not indicated in Fig. 1, see Figures 4 and 6) arranged in a battery pack 10. The battery pack is described with reference to Figures 2 to 6.

Figure 2 illustrates a perspective top view of a battery pack 10 according to an embodiment.

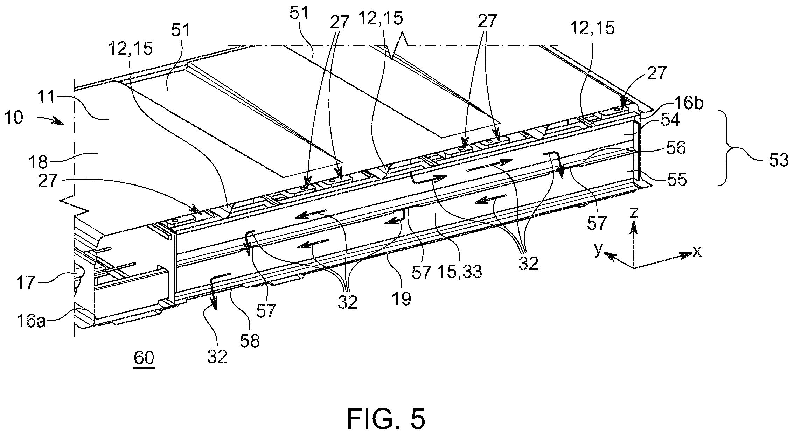

The battery pack 10 comprises a housing 11. The housing 11 comprises two longitudinal beams 13a, 13b, two crossbeams 16a, 16b (see also Figure 5), a top cover 18 and a bottom cover 19 (see Figure 3).

The longitudinal beams 13a, 13b are arranged parallel to each other and the crossbeams 16a, 16b are arranged between the longitudinal beams 13a, 13b and perpendicular to the longitudinal beams 13a, 13b.

The housing 11 provides an interior space (not shown) which is arranged between the two longitudinal beam 13a, 13b, the two crossbeams 16a, 16b, the top cover 18 and the bottom cover 19. In the interior space, a plurality of battery cells 20 is arranged as a plurality of cell stacks 27 (see Figures 4 to 6).

As shown in Figure 2, the top cover 18 is made of sheet metal and comprises a plurality of top cover depressions 51. The top cover depressions 51 are indentations and/or recesses of the top cover 18 and improve the stiffness of the top cover 18 and thus of the housing 11. Below the top cover 18, and between and/or adjacent to the top cover depressions 51, a plurality of gas channels 12 is arranged (not shown in Figure 1, see Figures 4 to 6).

A connector arrangement 17 is arranged at one of the crossbeams 16a to electrically interconnect the battery pack 10 with an electric vehicle 300 and/or to provide temperature control.

Figure 3 illustrates a perspective bottom view of a battery pack 10 according to an embodiment. The battery pack 10 of Figure 3 is the battery pack 10 as described with reference to Figure 2.

As shown in Figure 3, the bottom cover 19 is made of sheet metal and comprises a plurality of bottom cover depressions 52 and a mounting arrangement 50. The bottom cover depressions 52 are indentations and/or recesses of the bottom cover 19. The bottom cover depressions 52 improve the stiffness of the bottom cover 19 and thus of the housing 11 and may enable air to circulate below the bottom cover 19 to enable venting. The mounting arrangement 50 is adapted to mount the battery pack 10 within and/or to the electric vehicle 300.

The bottom cover 19 comprises an outlet opening 58. The outlet opening 58 is a through hole in the bottom cover 19. The outlet opening 58 is adapted to release a venting gas 30 (not shown in Figure 2, see Figures 4 and 5) from within the battery pack 10 into an exterior 60 of the battery pack 10.

Figure 4 illustrates a sectional view of a battery pack 10 according to an embodiment. The battery pack 10 of Figure 4 is the battery pack 10 as described with reference to Figures 2 and 3. In Figures 4 to 6, cartesian coordinates x,y,z are shown to describe the arrangement of the battery pack 10 and its components.

As shown in Figure 4, a plurality of battery cells 20.0, 20.1 (for an illustrative purpose, only a subset of battery cells 20.0, 20.1 is indicated) is arranged in cell stacks 27. I.e., the battery cells 20.0, 20.1 of one cell stack 27 are arranged in a stacked manner and parallel to each other. Therein, each of the battery cells 20.0, 20.1 comprises a longitudinal side surface 29 extending, in this representation, in the x-z-plane. Each of the longitudinal side surfaces 29 of the battery cells 20.0, 20.1 within the cell stack 27 contacts an adjacent longitudinal side surface 29 of an adjacent battery cell 20.0, 20.1 within the cell stack 27. Each of the cell stacks 27 comprises a plurality of battery cells 20.0, 20.1 stacked in y-direction. Two of the cell stacks 27 are shown in Figure 4.

One of the battery cells 20.0 is in a state of a thermal runaway T. Thus, the battery cell 20.0 in thermal runaway discharges a hot venting gas 30 as indicated by the double arrow. The remaining battery cells 20.1 are life battery cells 20.1 which may function regularly and may not be overheated. Thus, the plurality of battery cells 20.0, 20.1 as shown in Figure 4 is divided in the battery cell 20.0 in thermal runaway T and the remaining life battery cells 20.1.

The battery pack 10 comprises a gas channel 12. The gas channel 12 is arranged between the top cover 18 and each of the battery cells 20.0, 20.1. The gas channel 12 has a principal elongation in y-direction. The gas channel 12 extends above the plurality of battery cells 20.0, 20.1.

The gas channel 12 is made of metal and/or steel. The gas channel 12 comprises a cross section to allow a high-pressure venting gas 30 to pass through the gas channel 12 so as not to be a barrier for hot venting gas 30 under high pressure.

The gas channel 12 is mounted to the housing 11 as a structural member 15 of the housing 11. Specifically, the top cover 18 and the gas channel 12 are mounted together. The top cover 18 is mechanically supported by the gas channel 12.

Each of the battery cells 20.0, 20.1 comprises a cover face 23 (not indicated in Figure 4, see Figure 6). The cover face 23 is perpendicular to the longitudinal side surface 29 and, in this representation, arranged in the x-y-plane. The gas channel 12 is arranged above the cover face 23 of each of the battery cells 20.0, 20.1. Each of the battery cells 20.0, 20.1 comprises an outlet port 22 and a degassing valve 21 arranged at the cover face 23. The outlet port 22 is adapted to enable a fluid communication of an interior of the battery cell 20.0, 20.1 via the degassing valve 21 with an exterior of battery cells 20.0, 20.1. The degassing valve 21 is adapted to discharge a venting gas 30 from the battery cell 20.0, 20.1 in case of a thermal runaway T. The battery cell 20.0 in thermal runaway T discharges the venting gas 30 via the outlet port 22 and the degassing valve 21 in the gas channel 12.

The gas channel 12 is arranged and adapted to mechanically bond the plurality of battery cells 20.0, 20.1 (see also Figure 6). The gas channel 12, i.e., the venting channel, stiffens the structure of the battery pack 10 and/or the housing 11 in the x-y-plane, bonds the battery cells 20.0, 20.1 in z-direction and supports the top cover 18.

The battery pack 10 comprises a thermally and electrically isolating sheet 25. The isolating sheet 25 is arranged between the battery cells 20.0, 20.1 and the gas channel 12. The isolating sheet 25 is adapted to provide a conditional fluid communication between the gas channel 12 and each of the degassing valves 21 of the plurality of battery cells 20.0, 20.1, wherein the conditional fluid communication depends on one of the battery cells 20.0, 20.1 is ejecting and/or having ejected a venting gas 30 through the degassing valve 21 of the battery cell 20.0, 20.1. I.e., the battery cell 20.0 in thermal runaway T is in fluid communication with the gas channel 12 so that the battery cell 20.0 in thermal runaway T can discharge the venting gas 30 into the gas channel 12; the remaining life battery cells 20.1 are not in fluid communication with the gas channel 12, i.e., the isolating sheet 25 is adapted to block and/or prevent a fluid communication between the gas channel 12 and any of the life battery cells 20.1. Thus, the life battery cells 20.1 are separated from the venting gas 30 by the isolating sheet 25.

The isolating sheet 25 comprises a plurality of predetermined breaking sections 14. Each of the breaking sections 14 overlaps with one of the degassing valves 21 and outlet ports 22 of the battery cells 20.0, 20.1. The breaking section 14 of the isolating sheet 25 comprise a venting geometry, i.e., burst geometry, located above the degassing valves 21, i.e., the venting element of battery cells 20.0, 20.1. Each of the breaking sections 14, i.e., the venting opening, is adapted to open through a jet of hot venting gas 30 being ejected from the battery cell 20.0 in thermal runaway T and prevents the remaining life battery cells 20.1 from overheating by the still unbroken breaking sections 14 covering the life battery cells 20.1. The life battery cells 20.1 are shielded by the isolating sheet 25 from the venting gas 30 and are thus protected from heat and deposits by components of the venting gas.

Each of the breaking sections 14 is formed by a depression 26 of the isolating sheet 25. I.e., the isolating sheet 25 has a varying thickness, and the thickness is minimal at a breaking section 14 or an edge thereof. Each of the breaking sections 14 is adapted to break in dependence on a predetermined pressure and/or in dependence on one of the battery cells 20.0, 20.1 is ejecting and/or having ejected a venting gas 30 through the degassing valve 21 of the battery cell 20.0, 20.1.

The isolating sheet 25 is arranged between the gas channel 12 and the cover faces 23 of the battery cells 20.0, 20.1 to separate the battery cells 20.0, 20.1 and the gas channel 12 from each other. The isolating sheet 25 is clamped between the battery cells 20.0, 20.1 and the gas channel 12.

The battery pack 10 comprises a common venting channel 33 being arranged between a pair of the plurality of battery cells 20.0, 20.1. The common venting channel 33 branches off from the gas channel 12. The common venting channel 33 is arranged between adjacent cell stacks 27 and separates the adjacent cell stacks 27 from each other. The gas channel 12 comprises two elongated gas channel portions 12a, 12b. The common venting channel 33 is perpendicular to the two elongated gas channel portions 12a, 12b. Each of the gas channel portions 12a, 12b is arranged above the battery cells 20.0, 20.1 of one of the battery cells stacks 27. The two elongated gas channel portions 12a, 12b merge into the common venting channel 33. The common venting channel 33 is formed by a hollow beam 53 which is further described with reference to Figure 5.

The isolating sheet 25 is adapted to provide a conditional fluid communication between the gas channel 12 and the common venting channel 33. Thus, the isolating sheet 25 conditionally prevents the venting gas 30 to pass through the common venting channel 33 and provides a fluid communication between the gas channel 12 and the common venting channel 33, e.g., if a pressure difference of opposite faces of the isolating sheet 25 reaches a predetermined pressure threshold.

Figure 5 illustrates another sectional view of a battery pack 10 according to an embodiment. The battery pack 10 of Figure 5 is the battery pack 10 as described with reference to Figures 2 to 4.

The housing 11 comprises the hollow beam 53 as also described with reference to Figure 4. As shown in Figure 5, the hollow beam 53 comprises an upper beam section 54, a lower beam section 55 in fluid communication with the upper beam section 54 and a separation member 56. The upper beam section 54 and the lower beam section 55 are separated from each other by the separation member 56. The separation member 56 comprises one fluid passage 57 per gas channel 12, i.e., per pair of battery stacks 27, providing the fluid communication between the upper beam section 54 and the lower beam section 55.

The hollow beam 53 is arranged parallel to the longitudinal beams 13a, 13b and between the longitudinal beams 13a, 13b. The hollow beam 53 is arranged perpendicular to the crossbeams 16a, 16b. The common venting channel 33 is formed by, i.e., within, the hollow beam 53 and provides a structural element 15 of the housing 11.

As illustrated in Figure 5 and also in Figure 4, the battery pack 10 comprises a venting path 32. The venting path 32 is a path through the battery pack 10 along which a venting gas 30 is guided as indicated by the double arrow. The venting path 32 leads from the degassing valves 21 of the battery cells 20.0, 20.1 through the at least one gas channel 12, i.e., its elongated gas channel portions 12a, 12b, the hollow beam 53, i.e., the common venting channel 33, via the outlet opening 58 in the exterior 60 of the battery pack 10.

In x-direction, the gas channels 12 and the top cover depressions 51 are arranged alternatingly. I.e., one of the top cover depressions 51 is arranged between an adjacent pair of gas channels 12.

In a non-shown embodiment, the common venting channel 33 is arranged on a lateral side of battery housing 11, i.e., in one of the longitudinal beams 13a, 13b and/or a front or rear side, i.e., in one of the crossbeams 16a, 16b.

Figure 6 illustrates perspective view of a detail of a battery pack 10 according to an embodiment. The battery pack 10 of Figure 6 is the battery pack 10 as described with reference to Figures 2 to 5.

The gas channel 12 is arranged above the plurality of battery cells 20. Thus, the gas channel 12 is arranged to mechanically bond the plurality of battery cells 20 and the isolating sheet 25 being arranged between the gas channel 12 and the plurality of battery cells 20. The cell stacks 27, the isolating sheet 25, the gas channel 12 and the top cover 18 (not shown in Figure 6) are pressed and/or mounted together to affix the arrangement of the components and to clamp the isolating sheet 25 between the gas channel 12 and the plurality of battery cells 20.

Figure 6 shows the plurality of cell stacks 27. The battery pack 10 comprises cell stack connectors 28. Each of the cell stack connectors 28 is adapted to electrically interconnect a pair of cell stacks 27 with each other. As shown in Figure 6, the cell stack connectors 28 are essentially flat and interconnect the pair of cell stacks 27 at a cover faces 23 of one of the battery cells 20 of each of the pair of cell stacks 27 with each other. This allows an efficient manufacture of the cell stack connectors 28 and saves construction space within the battery pack 10 perpendicular to the cover faces 23 of the battery cells 20.

### Reference signs

- 10: battery pack
- 11: housing
- 12: gas channel
- 12a, 12b: gas channel portion
- 13a, 13b: longitudinal beam
- 14: breaking section
- 15: structural member
- 16a, 16b: crossbeam
- 17: connector arrangement
- 18: top cover
- 19: bottom cover
- 20, 20.0, 20.1: battery cell
- 21: degassing valve
- 22: outlet port
- 23: cover face
- 25: isolating sheet
- 26: depression
- 27: cell stack
- 28: cell stack connector
- 29: longitudinal side surface
- 30: venting gas
- 32: venting path
- 33: common venting channel
- 50: mounting arrangement
- 51: top cover depression
- 52: bottom cover depression
- 53: hollow beam
- 54: upper beam section
- 55: lower beam section
- 56: separation member
- 57: fluid passage
- 58: outlet opening
- 60: exterior
- 300: electric vehicle
- 310: electric motor

- x: cartesian coordinate, x-coordinate
- y: cartesian coordinate, y-coordinate
- z: cartesian coordinate, z-coordinate

- T: thermal runaway

## Claims

1. A battery pack (10) comprising a housing (11) and a plurality of battery cells (20, 20.0, 20.1) accommodated within the housing (11); wherein
- each of the plurality of battery cells (20, 20.0, 20.1) comprises a degassing valve (21);
- the battery pack (10) comprises a gas channel (12); wherein
- the gas channel (12) is mounted to the housing (11) as a structural member (15) of the housing (11);
- the battery pack (10) comprises a thermally and electrically isolating sheet (25), and the isolating sheet (25) is arranged between the battery cells (20, 20.0, 20.1) and the gas channel (12); and
wherein
- the housing (11) comprises two longitudinal beams (13a, 13b) two crossbeams (16a, 16b), a top cover (18) and a bottom cover (19) forming an interior space in which the plurality of battery cells (20) is arranged;
- the gas channel (12) is provided between the plurality of battery cells (20, 20.0, 20.1) and the top cover (18) of the housing (11) and the top cover (18) and the gas channel (12) are mounted together;
- the isolating sheet (25) is adapted to provide a conditional fluid communication between the gas channel (12) and each of the degassing valves (21) of the plurality of battery cells (20, 20.0, 20.1), wherein the conditional fluid communication depends on one of the battery cells (20, 20.0, 20.1) is ejecting and/or having ejected a venting gas (30) through the degassing valve (21) of the battery cell (20, 20.0, 20.1); and
- the isolating sheet (25) comprises a plurality of predetermined breaking sections (14), wherein each of the breaking sections (14) is arranged to overlap with one of the degassing valves (21) of the battery cells (20, 20.0, 20.1) and/or an outlet port (22) of one of the degassing valves (21) of the battery cells (20, 20.0, 20.1).

2. The battery pack according to claim 1, wherein
- each of the breaking sections (14) is formed by a plurality of perforations and/or by a depression (26) of the isolating sheet (25).

3. The battery pack according to any one of claims 1 or 2, wherein
- each of the breaking sections (14) is adapted to break in dependence on a predetermined pressure and/or in dependence on one of the battery cells (20, 20.0, 20.1) is ejecting and/or having ejected a venting gas (30) through the degassing valve (21) of the battery cell (20, 20.0, 20.1).

4. The battery pack according to any one of the preceding claims, wherein
- the gas channel (12) is arranged above a cover face (23) of each of the battery cells (20, 20.0, 20.1), and the isolating sheet (25) is arranged between the gas channel (12) and the cover faces (23) of the battery cells (20, 20.0, 20.1).

5. The battery pack according to any one of the preceding claims, wherein
- the gas channel (12) is made of metal and/or steel.

6. The battery pack according to any one of the preceding claims, wherein
- the isolating sheet (25) is clamped between the battery cells (20, 20.0, 20.1) and the gas channel (12).

7. The battery pack according to any one of the preceding claims, wherein
- the battery pack (10) comprises a common venting channel (33) branching off from the gas channel (12); wherein
- the isolating sheet (25) is adapted to provide a conditional fluid communication between the gas channel (12) and the common venting channel (33).

8. The battery pack according to claim 7, wherein
- the battery pack (10) comprises at least two cell stacks (27); wherein
- the common venting channel (33) is arranged between the at least two cell stacks (27).

9. The battery pack according to any one of the preceding claims, wherein
- the housing (11) comprises at least one hollow beam (53), wherein
- the battery pack (10) comprises a venting path (32) leading from the degassing valves (21) of the battery cells (20, 20.0, 20.1) through the at least one gas channel (12) and the at least one hollow beam (53) in an exterior (60) of the battery pack (10).

10. The battery pack according to claim 9, wherein
- the hollow beam (53) comprises an upper beam section (54), a lower beam section (55) in fluid communication with the upper beam section (54) and a separation member (56), wherein
- the upper beam section (54) and the lower beam section (55) are separated from each other by the separation member (56).

11. The battery pack according to claim 10, wherein
- the separation member (56) comprises at least one fluid passage (57) providing the conditional fluid communication between the upper beam section (54) and the lower beam section (55).

12. The battery pack according to any one of the preceding claims, wherein
- the at least one gas channel (12) is arranged and adapted to mechanically fixate the plurality of battery cells (20, 20.0, 20.1).

13. The battery pack according to any one of the preceding claims, wherein
- the housing (11) comprises a top cover (18), and the top cover (18) is mounted to the gas channel (12).

14. An electric vehicle (300) comprising the battery pack (10) according to any one of the preceding claims.

## Patentansprüche

1. Batteriepack (10), umfassend ein Gehäuse (11) und eine Mehrzahl von Batteriezellen (20, 20.0, 20.1), die innerhalb des Gehäuses (11) aufgenommen sind; wobei
- jede der Mehrzahl von Batteriezellen (20, 20.0, 20.1) ein Entgasungsventil (21) umfasst;
- das Batteriepack (10) einen Gaskanal (12) umfasst; wobei
- der Gaskanal (12) an dem Gehäuse (11) als Strukturelement (15) des Gehäuses (11) montiert ist;
- das Batteriepack (10) eine thermisch und elektrisch isolierende Schicht (25) umfasst und die isolierende Schicht (25) zwischen den Batteriezellen (20, 20.0, 20.1) und dem Gaskanal (12) angeordnet ist; und
wobei
- das Gehäuse (11) zwei Längsträger (13a, 13b), zwei Querträger (16a, 16b), eine obere Abdeckung (18) und eine untere Abdeckung (19) umfasst, die einen Innenraum ausbilden, in welchem die Mehrzahl von Batteriezellen (20) angeordnet ist;
- der Gaskanal (12) zwischen der Mehrzahl von Batteriezellen (20, 20.0, 20.1) und der oberen Abdeckung (18) des Gehäuses (11) bereitgestellt ist und die obere Abdeckung (18) und der Gaskanal (12) zusammenmontiert sind;
- die isolierende Schicht (25) dazu ausgelegt ist, eine bedingte Fluidverbindung zwischen dem Gaskanal (12) und jedem der Entgasungsventile (21) der Mehrzahl von Batteriezellen (20, 20.0, 20.1) bereitzustellen, wobei die bedingte Fluidverbindung davon abhängig ist, dass eine der Batteriezellen (20, 20.0, 20.1) ein Entlüftungsgas (30) durch das Entgasungsventil (21) der Batteriezelle (20, 20.0, 20.1) ausstößt und/oder ausgestoßen hat; und
- die isolierende Schicht (25) eine Mehrzahl von Sollbruchstellen (14) umfasst, wobei jede der Bruchstellen (14) so angeordnet ist, dass sie eines der Entgasungsventile (21) der Batteriezellen (20, 20.0, 20.1) und/oder eine Auslassöffnung (22) eines der Entgasungsventile (21) der Batteriezellen (20, 20.0, 20.1) überlappt.

2. Batteriepack nach Anspruch 1, wobei
- jede der Bruchstellen (14) durch eine Mehrzahl von Perforierungen und/oder durch eine Vertiefung (26) der isolierenden Schicht (25) ausgebildet ist.

3. Batteriepack nach einem der Ansprüche 1 oder 2, wobei
- jede der Bruchstellen (14) dazu ausgelegt ist, abhängig von einem vorbestimmten Druck und/oder abhängig davon, dass eine der Batteriezellen (20, 20.0, 20.1) ein Entlüftungsgas (30) durch das Entgasungsventil (21) der Batteriezelle (20, 20.0, 20.1) ausstößt und/oder ausgestoßen hat, zu brechen.

4. Batteriepack nach einem der vorangehenden Ansprüche, wobei
- der Gaskanal (12) über einer Abdeckfläche (23) jeder der Batteriezellen (20, 20.0, 20.1) angeordnet ist und die isolierende Schicht (25) zwischen dem Gaskanal (12) und den Abdeckflächen (23) der Batteriezellen (20, 20.0, 20.1) angeordnet ist.

5. Batteriepack nach einem der vorangehenden Ansprüche, wobei
- der Gaskanal (12) aus Metall und/oder Stahl hergestellt ist.

6. Batteriepack nach einem der vorangehenden Ansprüche, wobei
- die isolierende Schicht (25) zwischen den Batteriezellen (20, 20.0, 20.1) und dem Gaskanal (12) eingeklemmt ist.

7. Batteriepack nach einem der vorangehenden Ansprüche, wobei
- das Batteriepack (10) einen von dem Gaskanal (12) abzweigenden gemeinsamen Entlüftungskanal (33) umfasst; wobei
- die isolierende Schicht (25) dazu ausgelegt ist, eine bedingte Fluidverbindung zwischen dem Gaskanal (12) und dem gemeinsamen Entlüftungskanal (33) bereitzustellen.

8. Batteriepack nach Anspruch 7, wobei
- das Batteriepack (10) mindestens zwei Zellstapel (27) umfasst; wobei
- der gemeinsame Entlüftungskanal (33) zwischen den mindestens zwei Zellstapeln (27) angeordnet ist.

9. Batteriepack nach einem der vorangehenden Ansprüche, wobei
- das Gehäuse (11) mindestens einen Hohlträger (53) umfasst, wobei
- das Batteriepack (10) einen Entlüftungspfad (32) umfasst, der von den Entgasungsventilen (21) der Batteriezellen (20, 20.0, 20.1) über den mindestens einen Gaskanal (12) und den mindestens einen Hohlträger (53) in eine Umgebung (60) des Batteriepacks (10) führt.

10. Batteriepack nach Anspruch 9, wobei
- der Hohlträger (53) einen oberen Trägerabschnitt (54), einen unteren Trägerabschnitt (55), der in Fluidverbindung mit dem oberen Trägerabschnitt (54) steht, und ein Trennelement (56) umfasst, wobei
- der obere Trägerabschnitt (54) und der untere Trägerabschnitt (55) durch das Trennelement (56) voneinander getrennt sind.

11. Batteriepack nach Anspruch 10, wobei
- das Trennelement (56) mindestens einen Fluiddurchlass (57) umfasst, welcher die bedingte Fluidverbindung zwischen dem oberen Trägerabschnitt (54) und dem unteren Trägerabschnitt (55) bereitstellt.

12. Batteriepack nach einem der vorangehenden Ansprüche, wobei
- der mindestens eine Gaskanal (12) dazu angeordnet und ausgelegt ist, die Mehrzahl von Batteriezellen (20, 20.0, 20.1) mechanisch zu fixieren.

13. Batteriepack nach einem der vorangehenden Ansprüche, wobei
- das Gehäuse (11) eine obere Abdeckung (18) umfasst und die obere Abdeckung (18) an dem Gaskanal (12) montiert ist.

14. Elektrisches Fahrzeug (300), umfassend das Batteriepack (10) nach einem der vorangehenden Ansprüche.

## Revendications

1. Bloc-batterie (10) comprenant un boîtier (11) et une pluralité de cellules de batterie (20, 20.0, 20.1) logées à l'intérieur du boîtier (11) ; dans lequel
- chacune de la pluralité de cellules de batterie (20, 20.0, 20.1) comprend une soupape de dégazage (21) ;
- le bloc-batterie (10) comprend un canal de gaz (12) ; dans lequel
- le canal de gaz (12) est monté sur le boîtier (11) en tant qu'élément de structure (15) du boîtier (11) ;
- le bloc-batterie (10) comprend une feuille d'isolation thermique et électrique (25), et la feuille d'isolation (25) est agencée entre les cellules de batterie (20, 20.0, 20.1) et le canal de gaz (12) ; et
dans lequel
- le boîtier (11) comprend deux poutres longitudinales (13a, 13b), deux barres transversales (16a, 16b), un couvercle supérieur (18) et un couvercle inférieur (19) formant un espace intérieur dans lequel la pluralité de cellules de batterie (20) est agencée ;
- le canal de gaz (12) est ménagé entre la pluralité de cellules de batterie (20, 20.0, 20.1) et le couvercle supérieur (18) du boîtier (11) et le couvercle supérieur (18) et le canal de gaz (12) sont montés ensemble ;
- la feuille d'isolation (25) est adaptée pour assurer une communication fluidique conditionnelle entre le canal de gaz (12) et chacune des soupapes de dégazage (21) de la pluralité de cellules de batterie (20, 20.0, 20.1), dans lequel la communication fluidique conditionnelle dépend du fait que l'une des cellules de batterie (20, 20.0, 20.1) éjecte et/ou a éjecté un gaz d'évacuation (30) à travers la soupape de dégazage (21) de la cellule de batterie (20, 20.0, 20.1) ; et
- la feuille d'isolation (25) comprend une pluralité de sections de rupture prédéterminées (14), dans lequel chacune des sections de rupture (14) est agencée pour chevaucher l'une des soupapes de dégazage (21) des cellules de batterie (20, 20.0, 20.1) et/ou un orifice de sortie (22) de l'une des soupapes de dégazage (21) des cellules de batterie (20, 20.0, 20.1).

2. Bloc-batterie selon la revendication 1, dans lequel
- chacune des sections de rupture (14) est formée par une pluralité de perforations et/ou par une dépression (26) de la feuille d'isolation (25).

3. Bloc-batterie selon l'une quelconque des revendications 1 ou 2, dans lequel
- chacune des sections de rupture (14) est adaptée pour se rompre en fonction d'une pression prédéterminée et/ou en fonction du fait que l'une des cellules de batterie (20, 20.0, 20.1) éjecte et/ou a éjecté un gaz d'évacuation (30) à travers la soupape de dégazage (21) de la cellule de batterie (20, 20.0, 20.1).

4. Bloc-batterie selon l'une quelconque des revendications précédentes, dans lequel
- le canal de gaz (12) est agencé au-dessus d'une face de recouvrement (23) de chacune des cellules de batterie (20, 20.0, 20.1), et la feuille d'isolation (25) est agencée entre le canal de gaz (12) et les faces de recouvrement (23) des cellules de batterie (20, 20.0, 20.1).

5. Bloc-batterie selon l'une quelconque des revendications précédentes, dans lequel
- le canal de gaz (12) est constitué de métal et/ou d'acier.

6. Bloc-batterie selon l'une quelconque des revendications précédentes, dans lequel
- la feuille d'isolation (25) est serrée entre les cellules de batterie (20, 20.0, 20.1) et le canal de gaz (12).

7. Bloc-batterie selon l'une quelconque des revendications précédentes, dans lequel
- le bloc-batterie (10) comprend un canal d'évacuation commun (33) bifurquant à partir du canal de gaz (12) ; dans lequel
- la feuille d'isolation (25) est adaptée pour assurer une communication fluidique conditionnelle entre le canal de gaz (12) et le canal d'évacuation commun (33).

8. Bloc-batterie selon la revendication 7, dans lequel
- le bloc-batterie (10) comprend au moins deux empilements de cellules (27) ;
dans lequel
- le canal d'évacuation commun (33) est agencé entre les au moins deux empilements de cellules (27).

9. Bloc-batterie selon l'une quelconque des revendications précédentes, dans lequel
- le boîtier (11) comprend au moins une poutre creuse (53), dans lequel
- le bloc-batterie (10) comprend un trajet d'évacuation (32) menant des soupapes de dégazage (21) des cellules de batterie (20, 20.0, 20.1) à travers l'au moins un canal de gaz (12) et l'au moins une poutre creuse (53) à un extérieur (60) du bloc-batterie (10).

10. Bloc-batterie selon la revendication 9, dans lequel
- la poutre creuse (53) comprend une section de poutre supérieure (54), une section de poutre inférieure (55) en communication fluidique avec la section de poutre supérieure (54) et un élément de séparation (56) dans lequel
- la section de poutre supérieure (54) et la section de poutre inférieure (55) sont séparées l'une de l'autre par un élément de séparation (56).

11. Bloc-batterie selon la revendication 10, dans lequel
- l'élément de séparation (56) comprend au moins un passage de fluide (57) assurant la communication fluidique conditionnelle entre la section de poutre supérieure (54) et la section de poutre inférieure (55).

12. Bloc-batterie selon l'une quelconque des revendications précédentes, dans lequel
- l'au moins un canal de gaz (12) est agencé et adapté pour fixer mécaniquement la pluralité de cellules de batterie (20, 20.0, 20.1).

13. Bloc-batterie selon l'une quelconque des revendications précédentes, dans lequel
- le boîtier (11) comprend un couvercle supérieur (18), et le couvercle supérieur (18) est monté sur le canal de gaz (12).

14. Véhicule électrique (300) comprenant le bloc-batterie (10) selon l'une quelconque des revendications précédentes.
